# EUROPEAN PATENT APPLICATION

(11) **EP 3 205 996 A1**
(43) Date of publication of application: **16.08.2017**
(21) Application number: 16155693.1
(22) Date of filing: 15.02.2016
(51) Int. Cl.: G01L 19/06, G01M 3/32, G08B 13/20, H01H 35/24, B65D 55/02

(54) **TAMPER PREVENTION SYSTEM AND METHOD OF TAMPER PROOFING**

(71) Applicant: The European Atomic Energy Community (EURATOM), represented by the European Commission, 1049 Brussels (BE)
(72) Inventor: LITTMANN, François, 21034 Cocquio Trevisago (VA) (IT); SIRONI, Marco, 21014 Laveno-Mombello (IT)
(74) Representative: Office Freylinger

(57) **Abstract**

A tamper prevention system (90) for an article (2) to be protected. The tamper prevention system (90) comprises an enclosure (92) for receiving, in use, the article (2) to be protected. The enclosure (92) includes a sealable evacuation port (94) for applying a vacuum. The tamper prevention system (90) further comprises a monitoring and detection unit (50), contained within the enclosure 92. The monitoring and detection unit (50) includes a pressure sensor (80), the pressure sensor (80) being adapted to periodically or continuously sense the magnitude of the pressure inside the enclosure (92). The monitoring and detection unit (50) further includes a processor (54), coupled to the pressure sensor (80). The processor (54) is operable to determine that the enclosure (92) has been opened since sealing of the enclosure (92) under vacuum when it determines that a pressure detected by the pressure sensor (80) has undergone a predetermined change. The invention also relates to a method of tamper proofing an article (2) to be protected.

The article (2) to be protected may be a sealing bolt for sealing nuclear containers, but it is not limited to such sealing bolts. Indeed, the use of such a tamper prevention system is not limited to the size of the article to be protected, nor to the industry in which the article may be used.

## Description

### Technical field

The present invention generally relates to a tamper prevention system for tamper proofing an article to be protected. The article to be protected may e.g. be a sealing bolt, in particular a sealing bolt for sealing nuclear containers. Such a sealing bolt securely connects a container lid to a container body and may comprise means for identifying the individual bolts or containers.

### Background Art

Under some circumstances, the secure sealing of containers is necessary. It is of particular importance if such containers hold dangerous substances, such as for example fissile materials. In most cases, the container lid is connected to the container body by the use of at least one sealing bolt. Most often such a sealing bolt contains some kind of integrity element, breaking in case of violation and thereby revealing that the container may have been tampered with. Such a breakable integrity element can be concealed somewhere within the sealing bolt, which makes it more difficult to differentiate between standard sealing bolts and sealing bolts with additional security features. Thereby the number of sealing bolts with security features necessary to securely seal a container may be reduced.

An example of a sealing bolt in its most basic design is disclosed in GB-A-2067699. In one of the embodiments of the disclosure, the seal head is connected to its stud by a frangible integrity element that breaks at a given torque.

To further increase the security of sealing bolts, an identification element may be concealed inside the sealing bolts so as to reveal if the initial sealing bolt has been replaced by another sealing bolt of the same type. If the identity of the sealing bolt is different and/or the integrity element is broken, the sealing device or/and the contents of the container may have been tampered with.

Even if the existing sealing bolts already seal the containers very securely, there still is a need to further improve the security. Moreover, with the phasing out of nuclear plants, a lot of spent nuclear fuel will have to be stored in dry storage casks (containers), in Europe and throughout the world. Inspectors of Safeguards agencies will not be able to be physically present for the sealing operations needed for all of those casks. This is because of the huge costs of manpower and travel that would be involved, but also because operators perform filling of the casks at random intervals, depending on the process speed at their site.

It is known to provide for the sealing of casks without the physical presence of the inspectors, i.e. by means of remote monitoring with video surveillance; however, video surveillance is easily tampered with.

There is a need for systems and methods with enhanced security that enables a sealing device to be installed by the operator without the presence of an official inspector. In particular, there is a need for systems and methods that enable the package (containing a sealing bolt) to be shipped by the inspectors to the operator, such that they can trust/verify that it has not been modified or otherwise tampered with before installation.

### Technical problem

It is an object of the present invention to provide a tamper prevention system such as defined in claim 1. It is a further object of the present invention to provide a method of tamper proofing an article to be protected, such as defined in claim 9.

### General Description of the Invention

The present invention relates to a tamper prevention system for an article to be protected. The tamper prevention system comprises an enclosure for receiving, in use, the article to be protected. The enclosure includes a sealable evacuation port for applying a vacuum. The tamper prevention system further comprises a monitoring and detection unit, contained within the enclosure. The monitoring and detection unit includes a pressure sensor, the pressure sensor being adapted to periodically or continuously sense the magnitude of the pressure inside the enclosure. The monitoring and detection unit further includes a processor, coupled to the pressure sensor. The processor is operable to determine that the enclosure has been opened since sealing of the evacuation port under vacuum when it determines that a pressure detected by the pressure sensor has undergone a predetermined change.

Thus, any attempt to remove the article to be protected from the enclosure causes the sudden increase in pressure to be detected. A sudden increase in pressure can be interpreted as a sign that the article to be protected may have been tampered with. I.e. the system detects any variation of pressure inside the enclosure as opening attempts.

On the other hand, as long as the monitoring and detection unit indicates that the pressure detected by the pressure sensor has not undergone the predetermined change, closer inspection may not be necessary. This is of particular importance as this enables non-tampering to be verified before dispatch of the enclosure containing the article to be protected by an inspector, and upon receipt by the operator of the storage facility and prior to the use of the article to be protected.

The predetermined change may comprise a change in the sensed magnitude of the pressure greater than a first predetermined threshold.

The predetermined change may comprise a transition in the sensed magnitude of the pressure from below a second predetermined threshold (P_{L}) to above a third predetermined threshold (P_{U}).

The predetermined change may comprise (i) the change in the sensed magnitude of the pressure or (ii) the transition in the sensed magnitude of the pressure, respectively, having a duration less than or equal to a predetermined time threshold.

The processor may be operable to sample the sensed magnitude of the pressure at a predetermined frequency to derive sampled pressure magnitudes.

The monitoring and detection unit may further comprise a non-volatile memory, and wherein the processor is operable to store the sampled pressure magnitudes in a log in the non-volatile memory. The sampled pressure magnitudes may be time- and date-stamped in the log in the non-volatile memory.

The enclosure preferably comprises a flexible bag, e.g. made of one of (i) a plastics material and (ii) polyvinylchloride, wherein the flexible bag is collapsible under application of a vacuum. Alternatively, the enclosure may also comprise a rigid container.

The article to be protected may e.g. be a sealing bolt used for sealing nuclear containers. By placing such a sealing bolt in a tamper prevention system as disclosed above, the sealing bolt and the tamper proof system may be verified off-site by an inspector. At a later time and/or location, the sealing bolt may be retrieved from the enclosure and installed on a nuclear container by the operator without requiring an inspector to be present.

The article to be protected is not limited to such sealing bolts. Indeed, the enclosure may be designed large enough to e.g. comprise a complete nuclear container. Thus, the present tamper prevention system is not limited to the size of the article to be protected, nor to the industry in which the article may be used.

The monitoring and detection unit further comprises one or more visual indication elements. In embodiments, the processor is operable to illuminate the one or more visual indication elements (i) in a first state, indicating that the enclosure has not been opened since sealing of the evacuation port under vacuum, or (ii) in a second state, indicating that the enclosure has been opened since sealing of the evacuation port under vacuum.

In embodiments, (i) in the first state, one of the one or more visual indication elements are illuminated and, in the second state, two or more of the visual indication elements are illuminated, and/or (ii) in the first state, the one or more visual indication elements are illuminated in a first colour, e.g. red, and, in the second state, the one or more visual indication elements are illuminated in a second colour, e.g. green.

The invention further relates to a method of tamper proofing an article to be protected. The method comprises providing an enclosure, the enclosure including a sealable evacuation port. The method further comprises disposing the article to be protected and a monitoring and detection unit within the enclosure. The monitoring and detection unit includes a pressure sensor, the pressure sensor being adapted to periodically or continuously sense the magnitude of the pressure inside the enclosure. The monitoring and detection unit further includes a processor, coupled to the pressure sensor. The method further comprises applying a vacuum to the enclosure via the evacuation port. The method further comprises sealing the evacuation port under vacuum. The processor is operable to determine that the enclosure has been opened since sealing of the evacuation port under vacuum when it determines that a pressure detected by the pressure sensor has undergone a predetermined change.

In one embodiment, the predetermined change comprises a change in the sensed magnitude of the pressure greater than a first predetermined threshold.

In another embodiment, the predetermined change comprises a transition in the sensed magnitude of the pressure from below a second predetermined threshold (P_{L}) to above a third predetermined threshold (P_{U}).

In embodiments, the predetermined change comprises (i) the change in the sensed magnitude of the pressure or (ii) the transition in the sensed magnitude of the pressure, respectively, having a duration less than or equal to a predetermined time threshold.

The processor may be operable to sample the sensed magnitude of the pressure at a predetermined frequency to derive sampled pressure magnitudes.

The monitoring and detection unit may further comprise a non-volatile memory, and wherein the processor is operable to store the sampled pressure magnitudes in a log in the non-volatile memory. The sampled pressure magnitudes may be time- and date-stamped in the log in the non-volatile memory.

The enclosure preferably comprises a flexible bag, e.g. made of one of (i) a plastics material and (ii) polyvinylchloride, wherein the flexible bag is collapsible under application of a vacuum. Alternatively, the enclosure may comprise a rigid container.

The monitoring and detection unit may further comprise one or more visual indication elements.

In embodiments, the processor is operable to illuminate the one or more visual indication elements (i) in a first state, indicating that the enclosure has not been opened since sealing of the evacuation port under vacuum, or (ii) in a second state, indicating that the enclosure has been opened since sealing of the evacuation port under vacuum.

In embodiments, (i) in the first state, one of the one or more visual indication elements are illuminated and, in the second state, two or more of the visual indication elements are illuminated, and/or (ii) in the first state, the one or more visual indication elements are illuminated in a first colour, e.g. red, and, in the second state, the one or more visual indication elements are illuminated in a second colour, e.g. green.

In embodiments, an electronic monitoring and detection device is provided
a. running on batteries, having internal sensors, pressure, temperature, vibration, acceleration...,
b. which registers all the events monitored and store them into its internal memory,
c. during the period of time between shipment from inspectorate agencies and the venue of the inspector on site,
d. which can monitor the pressure inside the bag and detect openings, registering date and time when opened
e. which counts the time spent by the operator to install the seal (between opening of the bag and final installation detected), and/or
f. which incorporates anti-tampering features.

In embodiments, the anti-tampering enclosure is a transparent bag, in which the sealing bolt and the monitoring device are disposed, enabling user view of the contents and/or any visual indicator elements.

In embodiments, the electronic monitoring device is set up by the inspector and begins monitoring at the headquarters and will continuously monitor and register all incoming events during the few months between the closure of the enclosure, the use of the article to be protected and the final physical verification by one inspector. There is then monitoring of the vacuum pressure.

Advantageously, the fact that an enclosure has not been opened, and therefore that an article to be protected has not been used or modified, may readily be verified by an operator prior to installation (as well as by an inspector prior to shipping to the operator), e.g. by means of suitable visual indicator elements visible on the monitoring and detection unit. Thus, time and effort in inspecting/verification can be saved.

Further advantages of the invention, at least in embodiments, include:
a. to enable installation by the operator alone, but verified later, during an inspection by an inspector who is able to trust that the seal has not been tampered with in the meantime,
b. to include an anti-tampering enclosure containing the sealing bolt and an electronic monitoring and detection device, enabling the package to be shipped by the inspectors to the operator, the latter being able to trust the sealing bolt has not been modified before installation,
c. to identify univocally the article to be protected, and
d. to allow a secure check of the identity and integrity of the seal through ultrasonic scanning in case of doubts or possible attacks.

According to an embodiment, the article to be protected used herein is a sealing bolt comprising: a seal head adapted to be mounted to the container lid; a seal stud adapted to be mounted to the container body; a pin connecting the seal head to the seal stud, a cable arranged through a transverse passage in the pin; a resilient member arranged for biasing the pin into a first position, in which the conductor is compressed, wherein the pin is movable against the biasing by the resilient member into a second position by application to the seal head of a predetermined torque; a monitoring and detection unit, the monitoring and detection unit including a transmitter and a detector coupled to respective ends of the conductor, a processor, coupled to the transmitter and the detector, the processor being operable to determine that the pin has been moved into the second position for the first time when it determines that a signal detected by the detector has undergone a predetermined change. The conductor may be an optical fibre or an electrical cable or a fluid tube.

According to an embodiment, the predetermined change comprises a change in detected signal magnitude greater than a first predetermined threshold.

According to an embodiment, the predetermined change comprises a transition in detected signal magnitude from below a second predetermined threshold (V_{L}) to above a third predetermined threshold (V_{U}).

According to an embodiment, the predetermined change comprises (i) the change in detected signal magnitude or (ii) the transition in detected signal magnitude, respectively, having a duration less than or equal to a predetermined time threshold.

According to an embodiment, the processor is operable to sample the detected signal magnitude at a predetermined frequency to derive sampled signal magnitudes.

According to an embodiment, the monitoring and detection unit further comprises a non-volatile memory, and wherein the processor is operable to store the sampled signal magnitudes in a log in the non-volatile memory.

According to an embodiment, the sampled signal magnitudes are time- and date-stamped in the log in the non-volatile memory.

According to an embodiment, the conductor comprises an optical fibre, the transmitter comprises an optical transmitter, and the detector comprises an optical detector. Alternatively, the conductor may comprise an electrical cable. In which case, the transmitter would comprise an electrical transmitter and the detector would comprise an electrical detector. Alternatively, the conductor may comprise a fluid tube. In which case, the monitoring and detection unit would comprise a fluid detector.

According to an embodiment, the monitoring and detection unit further comprises one or more visual indication elements.

According to an embodiment, the processor is operable to illuminate the one or more visual indication elements (i) in a first state, indicating that the pin has not yet been moved out of the first position, or (ii) in a second state, indicating that that the pin has been moved into the second position for the first time.

According to an embodiment, (i) in the first state, one of the one or more visual indication elements are illuminated and, in the second state, two or more of the visual indication elements are illuminated, and/or (ii) in the first state, the one or more visual indication elements are illuminated in a first colour, e.g. red, and, in the second state, the one or more visual indication elements are illuminated in a second colour, e.g. green.

According to an embodiment, the predetermined torque corresponds to a compressive force on the resilient member lying in the range of 700-2500 daN, preferably 700-1500 daN.

According to an embodiment, the predetermined torque corresponds to an axial displacement of the pin relative to the seal head lying in the range of 0.5-1.5mm, preferably 0.7-1.3mm.

The invention also concerns a method of installing a sealing bolt, comprising:
providing a sealing bolt according to any of of the above embodiments;
optionally verifying that the sealing bolt has not been first used;
transporting the tamper prevention system to an installation site at which a container to be sealed is disposed;
verifying that the sealing bolt has not been first used; and if not
installing the sealing bolt on the container;
wherein the installing includes applying the predetermined torque to the sealing head of the sealing bolt until the processor determines that the signal detected by the detector has undergone the predetermined change.

### Brief Description of the Drawings

Further details and advantages of the present invention will be apparent from the following detailed description of several not limiting embodiments with reference to the attached drawings, wherein:
- Figure 1: is a cross sectional view through an assembled sealing bolt in accordance with an embodiment of the invention, in a first position;
- Figure 2: is an enlarged cross sectional view of the sealing bolt of Fig.1;
- Figure 3: is a schematic block diagram of a monitoring and detection unit used in embodiments of the invention;
- Figure 4: is a cross sectional view through an assembled sealing bolt in accordance with an embodiment of the invention, in a second position;
- Figure 5: is an enlarged cross sectional view of the sealing bolt of Fig.4;
- Figure 6: is a plot of signal magnitude output at optical detector during a transition from first position to the second position;
- Figure 7: shows a tamper prevention system according to an embodiment of the invention, in a pre-evacuated condition; and
- Figure 8: shows the tamper prevention system of Fig. 7, after evacuation.

### Description of Preferred Embodiments

The present invention seeks to provide a tamper prevention system for securely storing an article to be protected, such as e.g. a sealing bolt to be applied to nuclear dry storage casks. Indeed, the need for a sealing device able to be installed by the operator without the presence of an inspector is of utmost importance and urgency. Although the article to be protected is hereunder describes as being a sealing bolt for nuclear containers, the article to be protected should in no way be limited to such sealing bolts.

The tamper prevention system according to the present invention fulfils one or more of the following goals:
- to be installed by the operator alone but to be verified later on, during an inspection, by an inspector who has to trust that the seal has not been tampered in the meantime, meaning that the content of the cask is the same as when it was initially sealed;
- to include an anti-tampering enclosure containing the seal and an electronic monitoring device enabling the package to be shipped by the inspectors to the operator, while trusting that it has not been modified before installation;
- to include an electronic system connected to a conductor (e.g. optical fibre or electric cable or fluid tube) passing through the seal which detects that the seal has been installed just once;
- to be used on nuclear dry storage casks for replacing one or more cask bolts, without requiring modification of the cask itself;
- to include a conductor in the body of the seal that breaks at any attempt of tampering;
- to allow verification of the identity and integrity of the seal through an ultrasonic inspection;
- to carry an identity which can be univocally coupled with the container; and
- to be able to withstand harsh operating conditions.

In the description and drawings, like numerals are used to designate like elements. Unless indicated otherwise, any individual design feature, component or step may be used in combination with any other design features, components or steps disclosed herein.

In implementing the present invention in respect of a sealing bolt (and reader therefor), techniques as set out in EP 0 658 250 may be used, except as described hereinafter.

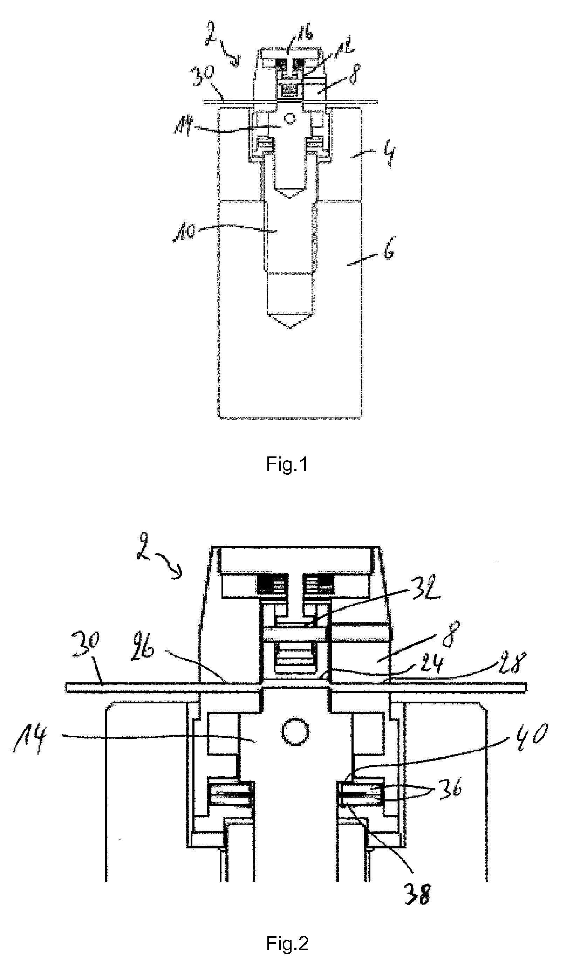

Fig.1 illustrates a preferred embodiment of a sealing bolt 2 in a first position. The sealing bolt 2 is in assembled state, and being used for sealing a container lid 4 to a container body 6. The sealing bolt 2 comprises a seal head 8 and a seal stud 10, the latter being fixedly arranged in the container body 6. The seal head 8 comprises a borehole 12 arranged along a vertical axis of the seal head 8. The borehole 12 is dimensioned and arranged for receiving a pin 14 therethrough. The pin 14 is connected with its upper end to a header plate 16, which is in turn connected to the seal head 8. At its lower end, the pin 14 is connected to the seal stud 10.

The pin 14 may comprise an area of reduced thickness (not shown) in which a rupture of the pin 14 is expected to occur when the seal head 8 is moved relative to the seal stud 10.

As best seen in Fig. 2, which is an enlarged cross-sectional view of the sealing bolt of Fig. 1, according to an embodiment of the present invention, the sealing bolt 2 further comprises a transverse passage 24 arranged through the pin 14 and two lateral passages 26, 28, which are designed to be in alignment with the transverse passage 24 when the sealing bolt 2 is assembled. As conductor, a fibre optic 30 is fed through the first lateral passage 26, the transverse passage 24 and the second lateral passage 28. This fibre optic 30 is used to not only verify the correct installation of the sealing bolt 2, but also the integrity of the sealing bolt 2.

During unscrewing of the seal, the seal head 8 freely rotates with respect to the pin 14 until it reaches an abutment, whereafter it then also entrains the seal stud 10 and the pin 14. As the seal head 8 rotates with respect to the pin 14, the fibre optic 30 passing through both is ruptured by Guillotine effect and a portion 30' of the fibre optic 30 may be left within the pin 14. The rupture of the fibre optic 30 is used to detect the opening of the sealing bolt 2 through the interruption of a signal passing through the fibre optic 30.

The seal head 8 is further provided with an identification element 32, storing a univocal identity of the sealing bolt 2. Such identification element 32 may comprise an ultrasonic identity element or an RFID tag. In the case of an ultrasonic identity element, techniques as set out in EP 1 042 746 may be used in its implementation.

Further in accordance with embodiments of the invention, the sealing bolt 2 has mounted therein a resilient member, in this embodiment a spring washer 36. The inner upper portions 38 of the spring washer 36 engage the shoulder 40 of pin 14, thereby urging pin 14 upwards. As a consequence, transverse passage 24 of pin 14 pushes the fibre optic 30 upwards and compresses it. The fibre optic 30 is thus in a first (compressed) condition prior to installation. Thus, Figs 1 and 2 illustrate the sealing bolt 2 in place but not tightened, springs 36 not fully loaded, and the fibre optic 30 compressed. In this condition (seal not tightened):
a. the two inner spring washers 36 are slightly loaded to maintain a minimal pressure on the fibre optic 30
b. the fibre optic 30 is pressed between the sealing head 8 and the pin 14, the quantity of light passing through is deceased and monitored an electronic device (discussed hereinafter) meaning not yet correctly installed
c. the ultrasonic integrity element 24 is connected to the pin 14 in rotation but is free in vertical translation.

With regard to spring washer 36, for this a Belleville washer is suitably used. Belleville washers allow for having a very high force in a small space and, even when completely crushed, one cannot exceed the elastic limit. They may be put in series or in parallel if one wishes to increase the stroke or the force.

Table 1 hereunder provides dimensions and parameters of Belleville washers suitable for use in embodiments of the invention.

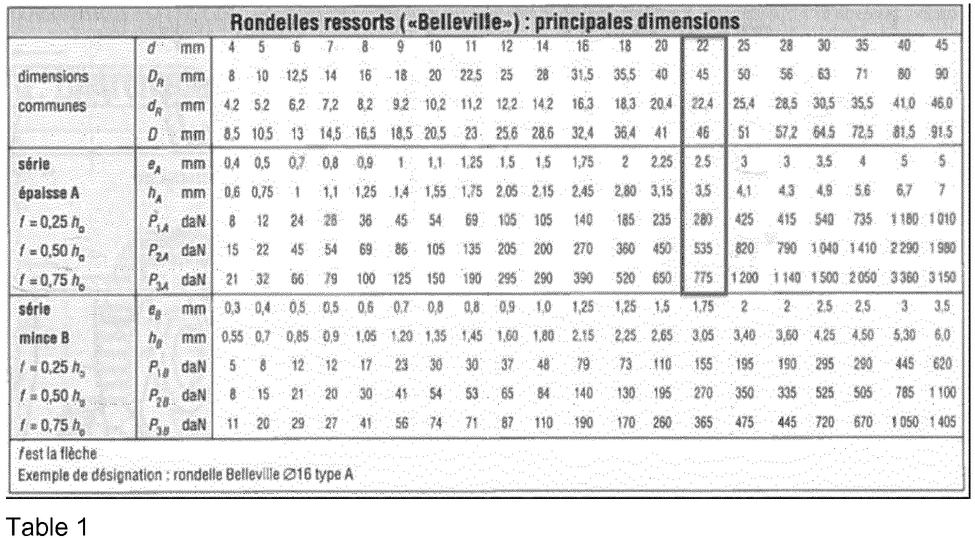

The specific washer used in the present embodiment is indicated in the highlighted column of Table 1: this washer operates well in the illustrated design, including the stress on the outer diameter so that the seal can be inserted into the cavity of the sealing bolt 2, maximizing the effort in compression of the spring washer 36. As will be appreciated, a force may be applied to compress the washer 36 below shoulder 40 during installation of the washer; and once released, the spring washer 36 consequently applies an upward compressive force on the fibre optic 30 via the pin 14.

In the present embodiment, a stress or force of 775 daN is obtained by compressing 1 mm. In addition, to obtain higher forces, two or three of the washers 36 may be placed parallel or in series to optimize the desired force and displacement required for pinching and releasing the fibre optic 30 completely.

A predetermined torque must be applied to seal head 8 in order to counteract the force of spring washer 36, to bring the two lateral passages 26, 28, back into alignment with the transverse passage 24, and thus bring fibre optic 30 back into a fully straight condition. Concerning the association torque / force, this depends on several parameters such as lubrication of the thread of the bolt. For the present purposes, what is important is to generate sufficient force so as to not be able to block the mechanism with something microscopic that could be inserted by the operator. The use of two washers 36 such as this in series would mean that a force of 1500 daN (1.5 tons) was required to block the mechanism. Moreover, even if the force generated in the bolt tightening torque is greater than the maximum force washers, such a washer will stop but will not be destroyed because it cannot exceed the elastic limit.

In embodiments, the predetermined torque corresponds to a compressive force on the resilient member lying in the range of 700-2500 daN, preferably 700-1500 daN.

In embodiments, predetermined torque corresponds to an axial displacement of the pin relative to the seal head lying in the range of 0.5-1.5mm, preferably 0.7-1.3mm.

In order to detect first use of the sealing bolt 2, the sealing bolt 2 is provided to the operator in the condition ("first position") shown in Fig. 2.

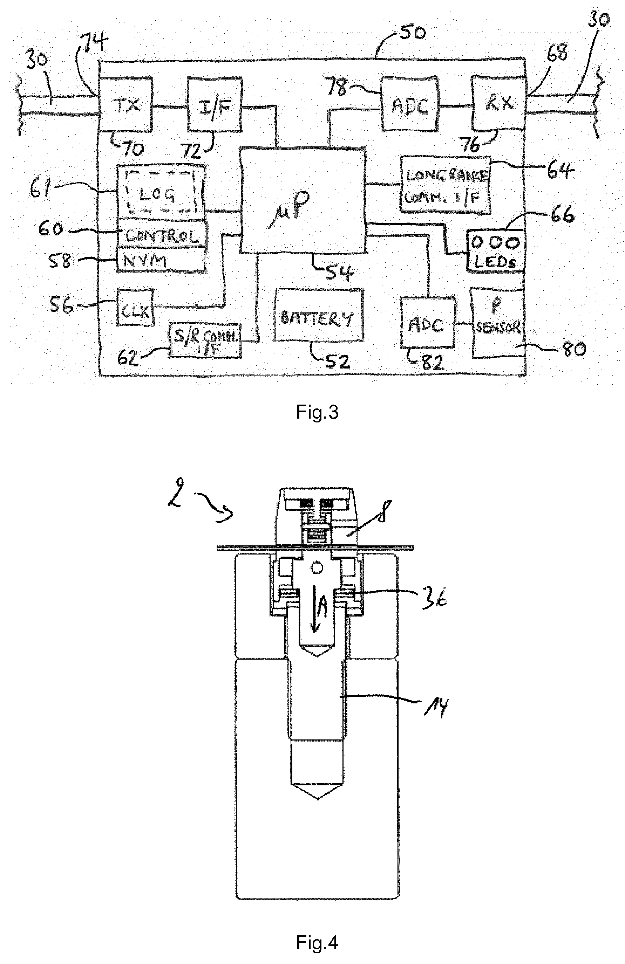

Figure 3 is a schematic block diagram of an electronic monitoring and detection unit 50, used in accordance with embodiments, e.g. for detecting first use of the sealing bolt 2. The electronic monitoring and detection unit 50 may be provided in a robust, compact housing (not shown) that is sealed, for example, by welding.

The electronic monitoring and detection unit 50 is independently powered, e.g. by battery 52, which may have a life of many months to many years. The electronic monitoring and detection unit 50 includes a microprocessor 54, which receives a clock signal from clock 56. The microprocessor 54 may derive real-time date and/or time from clock 56, or may obtain such data continuously from a real-time clock (not-shown), provided within electronic monitoring and detection unit 50; and the real-time date and/or time may be used for time-stamping of data, as discussed below.

Microprocessor 54 is also coupled to non-volatile memory (NVM) 58 which stores control software 60 (e.g. hardwired or firmware) for execution by microprocessor 54 for controlling the electronic monitoring and detection unit 50.

The electronic monitoring and detection unit 50 may further include a short-range communications interface 62 (e.g. near field communication (NFC), radiofrequency ID (RFID) or Bluetooth®), for conducting short-range communications with nearby devices, i.e. over a distance of a few centimetres to a few meters. The electronic monitoring and detection unit 50 may further include a long-range communications interface 64 (e.g. long-range radio or cellular wireless), for conducting long-range communications with remote devices, i.e. over a distance of a few Km to a few hundreds of Km, such as for remote reporting and maintenance.

Preferably, the electronic monitoring and detection unit 50 includes visual indication elements for indicating a current state or status of monitoring and detection unit 50. In this embodiment, the visual indication elements comprise LEDs 66.

In one embodiment, the electronic monitoring and detection unit 50 includes an optical transmitter 70 coupled to processor 54 by interface 72. Via a suitable connector (not shown), one end 74 of fibre optic 30 (see Fig. 2) is connected to optical transmitter 70. In use, optical transmitter 70 transmits optical signals (e.g. constant power/intensity) out through fibre optic 30. In this embodiment, the electronic monitoring and detection unit 50 includes an optical receiver/detector 76, coupled to processor 54 via interface analog-to-digital converter 78. Via a suitable connector (not shown), the other end 68 of fibre optic 30 (see Fig. 2) is connected to optical detector 76. The processor 54 thus receives in digital form signals indicating the magnitude or received optical signal detected by optical detector 76.

In use, the received signals are used by the processor 54 to determine whether and/or when the sealing bolt has been moved into a second position for the first time. In this embodiment, when a sufficient and predetermined torque is applied to seal head 8 of sealing bolt 2 (see Fig. 2), a required pressure is applied to counteract the biasing by spring washer 36 to move the sealing bolt 2 into a second position.

Figure 4 is a cross sectional view through an assembled sealing bolt in accordance with an embodiment of the invention, in a second position. This shows the disposition after application of the required predetermined torque to sealing head 8 so as to move pin 14 in the direction of arrow A against the spring bias of spring washer 36. The latter is now in a compressed form.

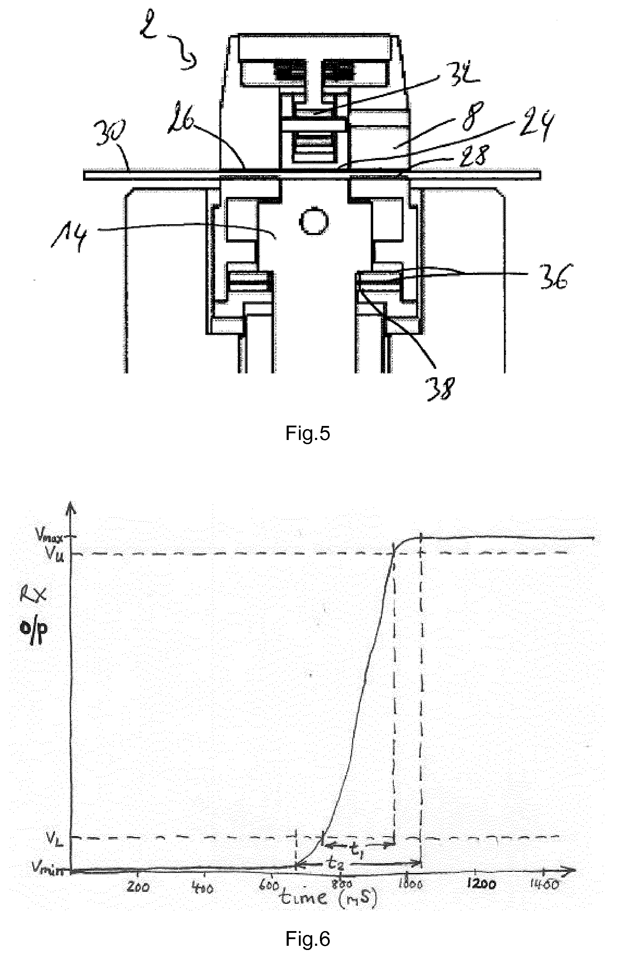

Figure 5 is an enlarged cross sectional view of the sealing bolt of Fig.4. Here, it can be seen that, in this second position, the predetermined torque applied to seal head 8 has brought the two lateral passages 26, 28, back into alignment with the transverse passage 24, and thus brought fibre optic 30 back into a fully straight condition. Thus, Figs 4 and 5 illustrate the sealing bolt 2 tightened, spring(s) 36 fully loaded, and the fibre 30 freed, meaning the sealing bolt 2 has been correctly installed once. In this condition (seal tightened):
a. the two inner spring washers 36 are fully loaded (e.g. roughly 1 ton) which means that the seal bolt 2 is tightened at a torque high enough to avoid undetected withdrawal. Pressure on the fibre optic 30 is released so maximum light is passing through it and monitored by the monitoring and detection unit 50, meaning the seal is now correctly installed.
b. the ultrasonic integrity element is still connected to the pin 14 in rotation but is free in vertical translation. The seal head 8 drives the pin 14 in rotation while tightened by means of a grain and pin (in reverse sense of rotation, pin 14 and seal head are free to rotate one with respect to the other, breaking the integrity element).

After the installation, the ultrasonic identity element is read for the final identification of the sealing bolt 2 and the integrity is checked. These readings are made using an ultrasonic reading head.

When the seal is removed, the pin 14 is fixed due to being tightened on the cask (container), the seal head 8 is rotating, which means that the fibre optic 30 will be cut between seal head 8 is and pin, and the integrity element will break due to being coupled in rotation with the pin 14 and welded to the seal head 8.

Thus, the sealing bolt 8 transitions under the required predetermined torque from a first position (Figs 1, 2), in which fibre optic 30 is compressed by pin 14, to the second position (Figs 4, 5), in which fibre optic 30 is uncompressed by pin 14 and in a fully straight condition. As a consequence, and referring to Fig. 3, received signal levels at the detector 76 are higher in the second position than in the first position.

Figure 6 is a plot of signal magnitude output at optical detector 76 during a transition from first position to the second position. The magnitude transitions from Vₘᵢₙ to Vₘₐₓ, and the time taken to do so is t₂. The processor 54 (Fig. 3) of the monitoring and detection unit 50 determines, based on the signal magnitude generated at optical detector 76, whether a signal transition indication of the predetermined torque being applied has first occurred, as when the sealing bolt 2 is properly installed for the first time.

In one embodiment, processor 54 (Fig. 3) determines whether the signal magnitude over time conforms to a first predetermined change, i.e. the change in magnitude is greater than a first threshold, i.e. (Vₘₐₓ - Vₘᵢₙ) >= V_{Thresh1}. Alternatively, processor 54 (Fig. 3) determines whether the signal magnitude over time conforms to a second predetermined change, i.e. the change in magnitude is greater than a first threshold and the duration of transition is within a first time period (T_{Thresh1}), i.e. (Vₘₐₓ - Vₘᵢₙ) >= V_{Thresh1} AND t₂ <= T_{Thresh1}.

In another embodiment, processor 54 (Fig. 3) determines whether the signal magnitude over time conforms to a third predetermined change, i.e. the signal magnitude transitions from below a first threshold to above a second threshold, i.e. Vₘᵢₙ < V_{L} AND Vₘₐₓ > Vu. Alternatively, processor 54 (Fig. 3) determines whether the signal magnitude over time conforms to a fourth predetermined change, i.e. the signal magnitude transitions from below the first threshold to above the second threshold and the duration of transition is within a second time period (T_{Thresh2}), i.e. (Vₘᵢₙ < V_{L} AND Vₘₐₓ > V_{U}) AND t1 <= T_{Thresh2}.

In embodiments, the monitoring and detection unit further comprises one or more visual indication elements (LEDs 66).

In embodiments, the processor is operable to illuminate the one or more LEDs 66 (i) in a first state, indicating that the pin has not yet been moved out of the first position, or (ii) in a second state, indicating that that the pin has been moved into the second position for the first time.

In embodiments, (i) in the first state, one of the one or more LEDs 66 are illuminated and, in the second state, two or more of the LEDs 66 are illuminated, and/or (ii) in the first state, the one or more LEDs 66 are illuminated in a first colour, e.g. red, and, in the second state, the one or more LEDs 66 are illuminated in a second colour, e.g. green.

Referring to Fig. 3, preferably, signal magnitude generated at optical detector 76 is sampled at a predetermined frequency (which may be 1-100KHz).

In one embodiment, processor 54 (Fig. 3) stores in NVM 58 a log of sampled and other data, i.e. in log 61. For example, in log 61 there may be stored all signal magnitude samples for the last period, e.g. the last 30-60 seconds, the last 300-600 seconds, or the last 30-60 minutes. In one embodiment, the processor discontinues sampling once one of the abovementioned predetermined changes in the magnitude signals is logged.

In one embodiment, processor 54 (Fig. 3) stores, in log 61, all data in a time and/or date-stamped manner, ready for later retrieval. Preferably, the last stored set of sampled magnitude signals, and/or the occurrence of one of the abovementioned predetermined changes in the magnitude signals, is stored together with a respective timestamp. In this way, the exact date time of the first use/installation of the sealing bolt 2 may be retrieved from the memory, as well as the sampled magnitude signals that it is based on.

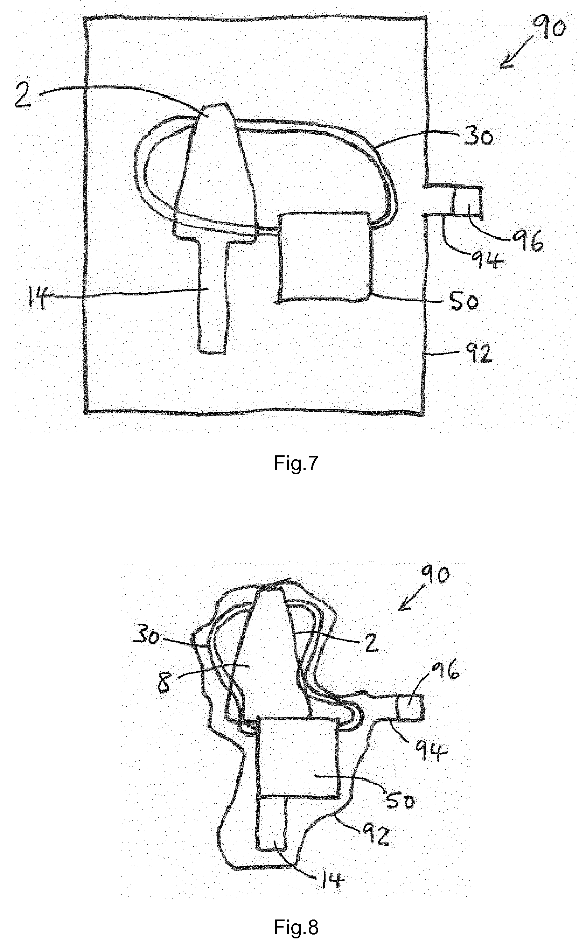

Figure 7 shows a tamper prevention system 90 according to an embodiment of the invention, in a pre-evacuated condition. A sealing bolt 2 comprising seal head 8 and pin 14 is placed in an anti-tamper enclosure, in this embodiment a bag 92. The bag 92 may be made of plastics material, such as polyvinylchloride (PVC). However, it will be appreciated by persons skilled in the art that other rigid or semi-rigid materials may be used.

The sealing bolt 2 may be the same as that described hereinbefore with reference to Figs 1-2 and 4-5.

As discussed above with reference to Figs 2-3, the ends of fibre optic 30 are optical transmitter and optical receiver (not shown) of the monitoring and detection unit 50.

Bag 92 includes a port 94 for engagement with an apparatus (not shown) for applying a vacuum, in use, to the interior of the bag 92. The port 94 is sealable (i.e. during application of the vacuum). For example, sealing may be accomplished by thermal welding of end cap 96 of port 94.

Figure 8 shows the tamper prevention system 90 of Fig. 7, after evacuation. It can be seen that the bag 92 is totally collapsed around the sealing bolt 2, fibre optic 30 and monitoring and detection unit 50: following sealing of the end cap 96, these elements are vacuum packed inside bag 92

Referring once again to Fig. 3, at least in this embodiment, monitoring and detection unit 50 includes a pressure sensor 80 coupled to processor 54 via ADC 82. The processor 54 thus continuously receives signals indicative of the (magnitude of the) pressure inside the bag 92.

Under the control of software in NVM 58, processor 54 is operable to determine when a (predetermined) change in pressure within the bag occurs, or rapidly occurs, i.e. from very low to atmospheric pressure.

The predetermined change may comprise a change in the sensed magnitude of the pressure greater than a first predetermined threshold. Alternatively, the predetermined change comprises a transition in the sensed magnitude of the pressure from below a second predetermined threshold (P_{L}) to above a third predetermined threshold (P_{U}).

In embodiments, the predetermined change comprises (i) the change in the sensed magnitude of the pressure or (ii) the transition in the sensed magnitude of the pressure, respectively, having a duration less than or equal to a predetermined time threshold.

The processor 54 may be operable to sample the sensed magnitude of the pressure at a predetermined frequency to derive sampled pressure magnitudes. The processor 54 may be operable to store the sampled pressure magnitudes in the log 61 log in the non-volatile memory 58. The sampled pressure magnitudes may be time- and date-stamped in the log in the non-volatile memory.

In embodiments, the processor is operable to illuminate the one or more LEDs 66 (i) in a first state, indicating that the enclosure has not been opened since sealing of the evacuation port under vacuum, or (ii) in a second state, indicating that that the enclosure has been opened since sealing of the evacuation port under vacuum. For example, (i) in the first state, one of the one or more LEDs 66 are illuminated and, in the second state, two or more of the LEDs 66 are illuminated, and/or (ii) in the first state, the one or more LEDs 66 are illuminated in a first colour, e.g. red, and, in the second state, the one or more LEDs 66 are illuminated in a second colour, e.g. green.

In use, a method of installing a sealing bolt may comprise first providing or obtaining (i.e. by the inspector) a tamper prevention system as described above.

Optionally, the inspector undertakes verifying that the bag 92 has not been opened since sealing of the evacuation port 94 under vacuum.

Next, the tamper prevention system is transported (e.g. at the instigation of the inspector) to an installation site at which a container to be sealed is disposed.

Then, once received by the operator, the operator undertakes verifying that the bag 92 has not been opened since sealing of the evacuation port under vacuum. This may involve, e.g., visual inspection of the state indicated by the LEDs 66 illuminated on the monitoring and detection unit 50, or verification by communication with the monitoring and detection unit 50 via short-range communications interface 56, e.g. via NFC.

If the state of the LEDs 66 (e.g. red) indicates that the bag 92 has been opened since evacuation, the sealing bolt 8 it contains is not installed and is discarded.

If, on the other hand, the state of the LEDs 66 (e.g. green) indicates that the bag 92 has not been opened since evacuation, the sealing bolt 8 it contains is removed from the bag 92.

Then, the sealing bolt 8 is installed in the appropriate container.

While embodiments have been described by reference to embodiments of survey devices having various components in their respective implementations, it will be appreciated that other embodiments make use of other combinations and permutations of these and other components.

It should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim.

Furthermore, while some embodiments described herein include some but not other features included in other embodiments, combinations of features of different embodiments are meant to be within the scope of the invention, and form different embodiments, as would be understood by those in the art.

In the claims below and the description herein, any one of the terms comprising, comprised of or which comprises is an open term that means including at least the elements/features that follow, but not excluding others.

Thus, while there has been described what are believed to be the preferred embodiments of the invention, those skilled in the art will recognize that other and further modifications may be made thereto without departing from the spirit and scope of the invention, and it is intended to claim all such changes and modifications as fall within the scope of the invention.

**Legend:**

| | | | |
|---|---|---|---|
| 2 | article (sealing bolt) | 56 | clock |
| 4 | container lid | 58 | NVM |
| 6 | container body | 60 | control software |
| 8 | seal head | 61 | log |
| 10 | seal stud | 62 | short-range communications interface |
| 12 | borehole | 64 | long-range communications interface |
| 14 | pin | 66 | LEDs |
| 16 | header plate | 68 | 2^{nd} end of fibre optic |
| 18 | area of reduced thickness | 70 | optical transmitter |
| 24 | transverse passage | 72 | interface |
| 26 | first lateral passage | 74 | 1^{st} end of fibre optic |
| 28 | second lateral passage | 76 | optical detector |
| 30 | conductor (fibre optic) | 78 | ADC |
| 32 | identification element | 80 | pressure sensor |
| 36 | spring washer | 82 | ADC |
| 38 | corner portion | 90 | tamper prevention system |
| 40 | shoulder | 92 | enclosure (bag) |
| 50 | monitoring and detection unit | 94 | evacuation port |
| 52 | battery | 96 | end cap |
| 54 | processor | | |

## Claims

1. A tamper prevention system, said tamper prevention system comprising:
an enclosure for receiving, in use, an article to be protected, the enclosure including a sealable evacuation port for applying a vacuum,
a monitoring and detection unit contained within the enclosure, the monitoring and detection unit including
a pressure sensor, the pressure sensor being adapted to periodically or continuously sense the magnitude of the pressure inside the enclosure,
a processor, coupled to the pressure sensor, the processor being operable to determine that the enclosure has been opened since sealing of the evacuation port under vacuum when it determines that a pressure detected by the pressure sensor has undergone a predetermined change.

2. The tamper prevention system according to claim 1, wherein the predetermined change comprises
a change in the sensed magnitude of the pressure greater than a first predetermined threshold; or
a transition in the sensed magnitude of the pressure from below a second predetermined threshold (P_{L}) to above a third predetermined threshold (P_{U}).

3. The tamper prevention system according to claim 2, wherein the predetermined change comprises (i) the change in the sensed magnitude of the pressure or (ii) the transition in the sensed magnitude of the pressure, respectively, having a duration less than or equal to a predetermined time threshold.

4. The tamper prevention system according to any of the preceding claims, wherein the processor is operable to sample the sensed magnitude of the pressure at a predetermined frequency to derive sampled pressure magnitudes.

5. The tamper prevention system according to claim 4, wherein the monitoring and detection unit further comprises a non-volatile memory, and wherein the processor is operable to store the sampled pressure magnitudes in a log in the non-volatile memory.

6. The tamper prevention system according to claim 5, wherein the sampled pressure magnitudes are time- and date-stamped in the log in the non-volatile memory.

7. The tamper prevention system according to any of claims 1 to 6, wherein the enclosure comprises a flexible bag, preferably made of one of (i) a plastics material and (ii) polyvinylchloride, wherein said flexible bag is collapsible under application of a vacuum.

8. The tamper prevention system according to any of claims 1 to 6, wherein the enclosure comprises a rigid container.

9. A method of tamper proofing an article to be protected, , the method comprising:
providing an enclosure, the enclosure including a sealable evacuation port;
disposing the article to be protected and a monitoring and detection unit within the enclosure, the monitoring and detection unit including
a pressure sensor, the pressure sensor being adapted to continuously sense the magnitude of the pressure inside the enclosure,
a processor, coupled to the pressure sensor,
applying a vacuum to the enclosure via the evacuation port; and
sealing the evacuation port under vacuum;
wherein the processor is operable to determine that the enclosure has been opened since sealing of the evacuation port under vacuum when it determines that a pressure detected by the pressure sensor has undergone a predetermined change.

10. The method according to claim 9, wherein the predetermined change comprises a change in the sensed magnitude of the pressure greater than a first predetermined threshold.

11. The method according to claim 9, wherein the predetermined change comprises a transition in the sensed magnitude of the pressure from below a second predetermined threshold (P_{L}) to above a third predetermined threshold (P_{U}).

12. The method according to claim 9, wherein the predetermined change comprises (i) the change in the sensed magnitude of the pressure or (ii) the transition in the sensed magnitude of the pressure, respectively, having a duration less than or equal to a predetermined time threshold.

13. The method according to any of claims 9 to 12, wherein the processor is operable to sample the sensed magnitude of the pressure at a predetermined frequency to derive sampled pressure magnitudes.

14. The method according to claim 13, wherein the monitoring and detection unit further comprises a non-volatile memory, and wherein the processor is operable to store the sampled pressure magnitudes in a log in the non-volatile memory.

15. The method according to claim 14, wherein the sampled pressure magnitudes are time- and date-stamped in the log in the non-volatile memory.
